# EUROPEAN PATENT APPLICATION

(11) **EP 4 228 022 A1**
(43) Date of publication of application: **16.08.2023**
(21) Application number: 21900905.7
(22) Date of filing: 23.11.2021
(51) Int. Cl.: H01M 4/131, H01M 4/62, H01M 4/505, H01M 4/1391, H01M 4/04

(54) **ELECTRODE FOR SECONDADRY BATTERY, SECONDARY BATTERY COMPRISING SAME, AND ELECTRODE MANUFACTURING METHOD**

(30) Priority: 04.12.2020 KR 20200168896
(71) Applicant: LG Energy Solution, Ltd., Seoul 07335 (KR)
(72) Inventor: KIM, Jeonggil, Daejeon 34122 (KR); KIM, Taegon, Daejeon 34122 (KR); KIM, Myeongsoo, Daejeon 34122 (KR)
(74) Representative: Goddar, Heinz J.
(86) International application number: PCT/KR2021/017314
(87) International publication number: WO 2022/119217

(57) **Abstract**

An electrode for secondary battery according to an embodiment of the present disclosure includes an electrode current collector; and an electrode layer positioned on the electrode current collector, wherein the electrode layer includes an electrode composition in which an active material, a conductive material and a binder are dry-mixed, and wherein a diameter of the micropore formed in the conductive material is the same as or larger than a size of the binder.

## Description

### [TECHNICAL FIELD]

### Cross Citation with Related Application so

This application claims the benefit of Korean Patent Application No. 10-2020-0168896 filed on December 4, 2020 with the Korean Intellectual Property Office, the disclosure of which is incorporated herein by reference in its entirety.

The present disclosure relates to an electrode for secondary battery, a secondary battery including the same, and a method of manufacturing the electrode, and more particularly, to an electrode for secondary battery having improved elastic modulus and resistance reduction effect, a secondary battery including the same, and a method of manufacturing the electrode.

### [BACKGROUND]

Technological development and increased demand for mobile equipment have led to a sharp rise in the demand for secondary batteries as energy sources. Among these secondary batteries, lithium secondary batteries having high energy density and driving voltage, long cycle lifespan and low self-discharge are commercially available and widely used.

In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

In addition, increased interest in environmental issues has brought about a great deal of research associated with electric vehicles and hybrid electric vehicles as alternatives to vehicles using fossil fuels such as gasoline vehicles and diesel vehicles which are major causes of air pollution. Nickel-metal hydride secondary batteries are generally used as power sources of electric vehicles and hybrid electric vehicles. However, a great deal of study associated with use of lithium secondary batteries with high energy density and high discharge voltage is currently underway and some of such lithium secondary batteries are commercially available.

Conventional electrodes for secondary batteries are generally manufactured by a wet method. However, if the electrode is manufactured by a wet method, a heat treatment process at a high temperature is essentially required, and thus there was a risk of damaging the metal oxide. Therefore, there is a growing need to develop an electrode manufactured by a dry method.

### [DETAILED DESCRIPTION OF THE INVENTION]

### [Technical Problem]

It is an object of the present disclosure to provide an electrode for secondary battery having improved elastic modulus and resistance reduction effect, a secondary battery including the same, and a method of manufacturing the electrode.

Objects of the present disclosure are not limited to the aforementioned objects, and other objects which are not described herein should be clearly understood by those skilled in the art from the following detailed description and the accompanying drawings.

### [Technical Solution]

According to one embodiment of the present disclosure, there is provided an electrode for secondary battery comprising: an electrode current collector; and an electrode layer positioned on the electrode current collector, wherein the electrode layer comprises an electrode composition in which an active material, a conductive material and a binder are dry-mixed, and wherein a diameter of the micropore formed in the conductive material is the same as or larger than a size of the binder.

The macropore diameter of the conductive material may be 30 nm or more and 1000 nm or less.

The particle size of the binder may be 30 nm or more and 1000 nm or less.

A specific surface area of the conductive material may be 1 m²/g or more and 100 m²/g or less.

A content of the conductive material may be 0.1% by weight or more and 10% by weight or less based on the total weight of the electrode composition.

The conductive material may include a 3D porous carbon material, and the binder may include polytetrafluoroethylene (PTFE).

The active material may include lithium manganese oxide (LMO).

The electrode composition is produced into a free-standing film, and the free-standing film may be attached onto the electrode current collector.

The free-standing film may have an elastic modulus value of 30 MPa or more and 400 MPa or less.

According to another embodiment of the present disclosure, there is provided a method of manufacturing an electrode for secondary battery, comprising the steps of: dry-mixing a conductive material and a binder to prepare a mixture; adding an active material to the mixture and then applying a shearing force to prepare an electrode composition; and attaching the electrode composition onto an electrode current collector to manufacture an electrode for a secondary battery, wherein a diameter of the macropore formed in the conductive material is the same as or larger than a size of the binder.

The macropore diameter of the conductive material may be 30 nm or more and 1000 nm or less.

The primary particle size of the binder may be 30 nm or more and 1000 nm or less.

A specific surface area of the conductive material may be 1 m²/g or more and 100 m²/g or less.

A content of the conductive material may be 0.1% by weight or more and 10% by weight or less based on the total weight of the electrode composition.

The conductive material may include a 3D porous carbon material, and the binder may include polytetrafluoroethylene (PTFE).

The active material may include lithium manganese oxide (LMO).

In the step of attaching the electrode composition onto an electrode current collector to manufacture an electrode for a secondary battery, the electrode composition may be produced into a free-standing film to be attached onto the electrode current collector.

The free-standing film may have an elastic modulus value of 30 MPa or more and 400 MPa or less.

According to yet another embodiment of the present disclosure, there is provided a secondary battery comprising the above-mentioned electrode for secondary battery.

### [BRIEF DESCRIPTION OF THE DRAWINGS]

Fig. 1 is a flowchart of a method for manufacturing an electrode for a secondary battery according to an embodiment of the present disclosure;
Fig. 2 is a graph for comparing the elastic modulus and initial discharge capacity according to the macropore diameter of the conductive material of the secondary battery electrode in Examples and Comparative Examples of the present disclosure, respectively;
Fig. 3 is a graph for comparing an elastic modulus and an initial discharge capacity according to a specific surface area of a conductive material of an electrode for a secondary battery in Examples and Comparative Examples of the present disclosure, respectively; and
Fig. 4 is a graph for comparing an elastic modulus and an initial discharge capacity according to a binder content of an electrode for a secondary battery in Examples and Comparative Examples of the present disclosure, respectively.

### [DETAILED DESCRIPTION OF THE EMBODIMENTS]

Hereinafter, embodiments of the present disclosure will be described in detail so that those skilled in the art can easily carry out them. However, the present disclosure may be modified in various different ways, and is not limited to the embodiments set forth herein.

Now, an electrode for secondary battery according to an embodiment of the present disclosure will be described.

An electrode for secondary battery according to an embodiment of the present disclosure includes an electrode current collector; and an electrode layer formed as a free-standing film on the electrode current collector. The electrode layer includes an electrode composition in which an active material, a conductive material and a binder are dry-mixed.

The electrode layer may be formed by a lamination step after a free-standing film is first produced and the free-standing film is attached onto the electrode current collector. Here, the free-standing film may have an elastic modulus value of 30 MPa or more and 400 MPa or less. Here, the elastic modulus value is measured by a DMA (Dynamic Mechanical Analysis) instrument, and may be defined as a value measured for a free-standing film having a thickness of 400 um at 25°C.

Thereby, the free-standing film may be in a state in which the active material, the conductive material, and the binder included in the electrode composition are mixed with each other with high binding force, and the free-standing film can be easily stored in the form of a roll. Further, the free-standing film may be effective in improving productivity and improving flexibility of the electrode. However, when the elastic modulus value of the free-standing film is less than 30 MPa, there is a risk of damage during the cell manufacturing process, and cracks occur between the electrode active materials in the electrode during charging and discharging, which leads to a reduction in processability and durability, and may not be easy to store in the manufacturing process.

Next, each component included in the electrode for secondary battery according to an embodiment of the present disclosure will be described in detail.

The binder plays a role of improving adhesion between the active material particles and adhesive strength between the active material and the current collector. Specific examples include polytetrafluoroethylene (PTFE), polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropyl cellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluororubber, or various copolymers thereof, and any one alone or a mixture of two or more of them may be used.

In one example, the binder may include polytetrafluoroethylene (PTFE). Here, polytetrafluoroethylene (PTFE) has a characteristic that the fibers are pulled out from the particles as a shearing force is applied. That is, in the electrode for secondary battery according to an embodiment of the present disclosure, a strong shearing force is applied to the electrode composition including polytetrafluoroethylene (PTFE) as a binder, and the electrode composition may be mixed by a physical mixing method according to the fiberization of polytetrafluoroethylene (PTFE).

Thereby, in the electrode for secondary battery according to an embodiment of the present disclosure, the electrode composition may be dry-mixed without a separate solvent or additive, whereby it is very effective for bridging between active material particles or bridging between active material particles and a current collector, and it can overcome the limitation of electrode loading according to the existing mixing method, and further a drying furnace is unnecessary and the process cost can be reduced.

Further, the content of the binder may be 0.1% by weight or more and 5% by weight or less based on the total weight of the electrode composition. More preferably, the content of the binder may be 1% by weight or more and 4% by weight or less based on the total weight of the electrode composition. In one example, the content of the binder may be 2% by weight or more and 3% by weight or less based on the total weight of the electrode composition.

Thereby, the electrode for a secondary battery according to the present embodiment contains the binder in the above-mentioned content range, the fiberization of the binder can be maximized, and the bridging effect between particles inside the electrode composition is excellent, and thus the elastic modulus may be excellent. In addition to this, the aggregation phenomenon of the binder can be prevented and the dispersibility can be improved, so that the resistance reduction effect of the electrode containing the electrode composition can be excellent.

On the other hand, when the content of the binder is less than 0.1% by weight, the bridging effect between particles inside the electrode composition is insufficient, and thus the tensile strength may also be greatly reduced. Further, when the content of the binder is more than 5% by weight, the binder acts as a resistance in the electrode containing the electrode composition, which may cause a problem that it is difficult to expect high output.

Further, the particle size of the binder may be 30 nm or more and 1000 nm or less. More preferably, the particle size of the binder may be 35 nm or more and 500 nm or less. In one example, the particle size of the binder may be 40 nm or more and 400 nm or less. Here, the particle size of the binder is the size of the particles before the fiberization of the binder progresses, which may also be defined as a primary particle size.

Therefore, the electrode for secondary battery according to the present embodiment includes the binder having a size in the above-described range, whereby the binder can be effectively dispersed in the electrode composition. In addition, the resistance reduction effect may be improved by improving the dispersibility of the binder. Further, the fiberization of the binder can be increased, and the electrode strength may also be improved.

Unlike the same, when the particle size of the binder is less than 30 nm, the fiberization of the binder may be insufficiently progressed, which may cause a problem that the electrode strength is reduced. Further, when the particle size of the binder exceeds 1000 nm, the shearing force required for the fiberization of the binder to proceed in the electrode composition must be relatively large, which may cause a problem that a separate step is required in the manufacturing process or the conditions in the process are complicated.

The conductive material is used to impart conductivity to the electrode, and the conductive material can be used without particular limitation as long as it has electronic conductivity without causing chemical changes in the battery to be configured. Specific examples thereof include carbon-based materials such as carbon black, acetylene black, ketjen black, channel black, furnace black, lamp black, thermal black, carbon graphene and carbon fiber; graphite such as natural graphite and artificial graphite; metal powder or metal fibers such as copper, nickel, aluminum and silver; conductive whiskey such as zinc oxide and potassium titanate; conductive metal oxides such as titanium oxide; or a conductive polymer such as a polyphenylene derivative, and any one alone or a mixture of two or more of them may be used.

In one example, the conductive material may include a 3D porous carbon material. Here, the 3D porous carbon material may also serve as a support of the binder. In one example, when polytetrafluoroethylene (PTFE) is used as the binder, the conductive material in the electrode composition may be used as a support for polytetrafluoroethylene (PTFE).

The macropore diameter of the conductive material may be 30 nm or more and 1000 nm or less. More preferably, the macropore diameter of the conductive material may be 35 nm or more and 800 nm or less. In one example, the macropore diameter of the conductive material may be 40 nm or more and 700 nm or less.

Thereby, the electrode for secondary battery according to the present embodiment includes the conductive material having a macropore diameter within the above-mentioned range, so that a difference between the diameter of the macropore of the conductive material and the size of the binder may be relatively small. Thereby, the conductive material can sufficiently perform the role of a support for the binder, and the binder can be effectively dispersed in the electrode composition. In addition, the resistance reduction effect can be improved by improving the dispersibility of the binder. Further, since the fiberization of the binder may be increased, the electrode strength can also be improved. Further, when the macropore diameter of the conductive material is less than 30 nm, the dispersibility of the binder is reduced, agglomeration phenomenon of the binder itself may increase, and the resistance reduction effect may also be reduced. Further, when the macropore diameter of the conductive material is more than 1000 nm, there is a problem that it is difficult to prepare the conductive material satisfying the corresponding diameter, the manufacturing process is complicated, and the manufacturing cost is also increased.

Further, the specific surface area of the conductive material may be 1 m²/g or more and 100 m²/g or less. More preferably, the specific surface area of the conductive material may be 20 m²/g or more and 80 m²/g or less. In one example, the specific surface area of the conductive material may be 30 m²/g or more and 70 m²/g or less.

Therefore, the electrode for secondary battery according to the present embodiment includes the conductive material having a specific surface area in the above-described range, whereby generation of internal gas due to a side reaction of an electrolyte when a battery cell including the electrode for a secondary battery is driven can be prevented. On the other hand, when the specific surface area of the conductive material exceeds 100 m²/g, there is a problem that an internal gas is excessively generated due to a side reaction of an electrolyte solution at the time of driving a battery cell including the electrode for secondary battery. Further, when the specific surface area of the conductive material is less than 1 m²/g, the binding force between the active material and/or the binder in the electrode composition is reduced, which may lead to a reduction in the battery performance.

Further, the conductive material may be contained in an amount of 0.1% by weight to 10% by weight based on the total weight of the electrode composition. More preferably, the conductive material may be contained in an amount of 0.3 % by weight to 9.5% by weight based on the total weight. In one example, the conductive material may be contained in an amount of 0.5% by weight to 9% by weight based on the total weight.

Therefore, in the electrode for secondary battery according to the present embodiment, the conductive material is contained in the above-mentioned content range, whereby the fiberization of the binder can be maximized, and the bridging effect between particles inside the electrode composition resulting therefrom is excellent, and thus the elastic modulus may be excellent. In addition, aggregation phenomenon of the binder can be prevented, the dispersibility can be enhanced, and thus, the resistance reduction effect of the electrode including the electrode composition can be excellent.

Unlike the same, when the content of the conductive material is less than 0.1% by weight, the bridging effect between particles inside the electrode composition is insufficient, and thus the elastic modulus may also be greatly reduced. Further, when the content of the conductive material is more than 10% by weight, the content of the active material or binder in the electrode composition is relatively reduced, which may cause a problem that the battery performance or the elastic modulus decreases.

The active material may be a positive electrode active material. The positive electrode active material is, for example, a lithium transition metal oxide, which can be selected from the group consisting of LiCoO2, LiNiO2, LiMnO2, LiMn2O4, Li(NiaCobMnc)02(0<a<1, 0<b<1, 0<c<1, a+b+c=1), LiNi1-yCoyO2(O<y<1), Li Co 1-y Mny02, LiNi1-yMnyO2(O<y<1), Li(NiaCobMnc)O4(0<a<2, 0<b<2, 0<c<2, a+b+c=2), LiMn2-zNizO4(0<z<2), LiMn2-zCozO4(0<z<2) and a combination thereof.

In one example, the active material may include lithium manganese oxide (LMO). Here, the active material may be contained in an amount of 85% by weight to 99% by weight based on the total weight of the electrode composition. More preferably, the active material may be contained in an amount of 87% by weight to 98% by weight based on the total weight of the electrode composition. In one example, the active material may be contained in an amount of 89 % by weight to 97% by weight based on the total weight of the electrode composition.

The above-mentioned electrode for secondary battery may be included as a positive electrode in a secondary battery according to another embodiment of the present disclosure. More specifically, the secondary battery according to another embodiment of the present disclosure may include an electrode assembly including the positive electrode, the negative electrode, and a separator interposed between the positive electrode and the negative electrode, and an electrolyte.

The negative electrode may be manufactured by applying a negative electrode slurry containing a negative electrode active material, a polymer material, a conductive material, and the like onto the negative electrode current collector, as in the electrode for secondary battery.

The negative electrode may also be manufactured in a form in which the negative electrode slurry containing the negative electrode active material is attached or applied on the negative electrode current collector, and the negative electrode slurry may further include the conductive material and polymer material as described above, together with the negative electrode active material.

As the negative electrode active material, a common negative electrode active material for lithium secondary batteries in the art may be used. In one example, a material such as lithium metal, lithium alloy, petroleum cork, activated carbon, graphite, silicon, tin, metal oxide or other carbons may be used.

The negative electrode current collector is not particularly limited as long as it has high conductivity without causing a chemical change in the battery. For example, copper, stainless steel, aluminum, nickel, titanium, calcined carbon, copper or stainless steel having a surface treated with carbon, nickel, titanium, silver, etc., aluminum-cadmium alloy, and the like can be used.

The separator separates the negative electrode and the positive electrode, and provides a passage for lithium ions to move. Any separator may be used without particular limitation as long as it is generally used as a separator in a lithium secondary battery. Particularly, a separator having excellent moisture-retention ability for an electrolyte while having low resistance to the migration of electrolyte ions is preferable.

In addition, the electrolyte solution used in the present disclosure may include an organic liquid electrolyte, an inorganic liquid electrolyte, a solid polymer electrolyte, a gel type polymer electrolyte, a solid inorganic electrolyte, a molten inorganic electrolyte or the like which can be used in the production of a lithium secondary battery, but is not limited thereto.

Specifically, the electrolyte solution may include an organic solvent and a lithium salt. As the organic solvent, any solvent can be used without particular limitation as long as it can serve as a medium through which ions involved in the electrochemical reaction of the battery can migrate. The lithium salt can be used without particular limitation as long as it is a compound capable of providing lithium ions used in a lithium secondary battery.

In order to improve the lifespan characteristics of the battery, suppress a reduction in battery capacity and improve discharge capacity of the battery, the electrolyte solution may further include, for example, one or more additives such as a haloalkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinones, N,N-substituted imidazolidine, ethylene glycol dialkyl ether, an ammonium salt, pyrrole, 2-methoxy ethanol, or aluminum trichloride, in addition to the above electrolyte components. In this case, the additive may be included in an amount of 0.1% by weight to 5% by weight based on the total weight of the electrolyte solution.

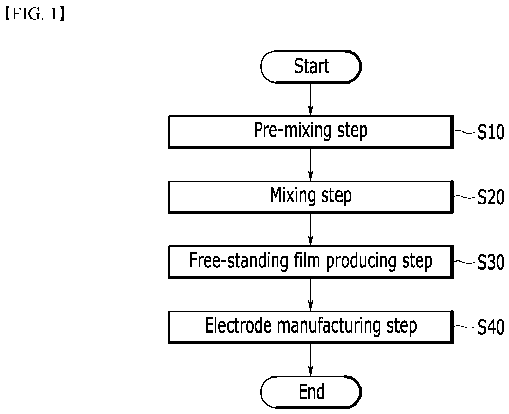

Fig. 1 is a flowchart of a method for manufacturing an electrode for a secondary battery according to an embodiment of the present disclosure.

Referring to Fig. 1, the method of manufacturing an electrode according to the present embodiment includes a pre-mixing step (S10) of mixing a conductive material and a binder to prepare a mixture in which the binder is uniformly dispersed, a mixing step (S20) of adding an active material to the mixture and then applying a shearing force to prepare an electrode composition, a step (S30) of producing a free-standing film using the electrode composition, and a step (S40) of attaching the free-standing film onto the electrode current collector to manufacture an electrode through a lamination step.

In the pre-mixing step (S10), the conductive material and the binder may be dry-mixed. The diameter of the macropore formed in the conductive material is the same as or larger than the size of the binder.

Hereinafter, the contents of the present disclosure will be described by way of more specific examples. However, these examples are for illustrative purposes only, and the scope of the present disclosure is not limited thereto.

### <Example 1>

A premixing step of preparing a mixture in which a conductive material and a binder were dry-mixed using a Waring Blender equipment was performed. At this time, the pre-mixing step (S10) was performed at 5000 rpm for 1 minute, so that only the mixing of the conductive material and the binder was induced. After that, using Bench Kneader PBV-0.1L equipment (from Irie-Shokai), a mixing step (S20) in which an active material was added to the mixture prepared in the pre-mixing step (S10) to prepare an electrode composition was performed.

Here, the active material was 97 wt% of lithium manganese oxide (available from LMO), the conductive material was 2 wt % of a 3D porous carbon material having a specific surface area of 50 m²/g and a pore diameter of 50 nm. Further, the binder was 1 wt% of polytetrafluoroethylene (PTFE) of 50 nm.

### <Example 2>

An electrode composition was prepared in the same manner as in Example 1, except that in Example 1, the macropore diameter of the conductive material was 100 nm.

### <Example 3>

An electrode composition was prepared in the same manner as in Example 1, except that in Example 1, the specific surface area of the conductive material was 80 m²/g.

### <Comparative Example 4>

An electrode composition was prepared in the same manner as in Example 1, except that in Example 1, the content of the binder was 10 wt%, and the content of the positive active material was 88 wt%.

### <Comparative Example 5>

An electrode composition was prepared in the same manner as in Example 1, except that in Example 1, the specific surface area of the conductive material was 1000 m²/g.

### <Comparative Example 1>

An electrode composition was prepared in the same manner as in Example 1, except that in Example 1, the macropore diameter of the conductive material was 2 nm.

### <Experimental Example 1 (Measurement of Elastic Modulus)>

For the electrode compositions prepared in Examples 1 to 5 and Comparative Example 1, respectively, a pre-standing film producing step (S30) of producing a pre-standing film having a length of 800 mm, a width of 500 mm, and a thickness of 400 um using a roll mill equipment (manufactured by Inoue Seisakusho) was performed. For each produced free-standing film, both side ends were fixed with a jig, and then the elastic modulus of the free-standing film was measured under the conditions of a frequency of 1Hz and a strain of 0.1% using DMA equipment (manufactured by TA Instruments). The results are shown in Table 1 below.

**[Table 1]**

| | Composition | | | | | | Elastic modulus (MPa, @25°C) |
|---|---|---|---|---|---|---|---|
| | Positive electrode active material (%) | Binder | | Conductive material | | | |
| | | Content (%) | Size (nm) | Content (%) | Specific surface area (m²/g) | Macropor e diameter (nm) | |
| Example 1 | 97 | 1 | 50 | 2 | 50 | 50 | 150 |
| Example 2 | 97 | 1 | 50 | 2 | 50 | 100 | 105 |
| Example 3 | 97 | 1 | 50 | 2 | 80 | 100 | 108 |
| Example 4 | 88 | 10 | 50 | 2 | 50 | 50 | 325 |
| Example 5 | 97 | 1 | 50 | 2 | 2000 | 50 | 140 |
| Comparat ive Example 1 | 97 | 1 | 50 | 2 | 50 | 2 | 22 |

### <Experimental Example 2 (Measurement of discharge capacity)>

For Examples 1 to 5 and Comparative Example 1, a lithium metal having a thickness of 200 um was used as a negative electrode together with the positive electrode manufactured in Experimental Example 1 to make half coin cells. Then, each of the half coin cells was charged and discharged under 0.1C/0.1C conditions in a voltage range of 3.0 to 4.3V, and then the discharge capacity value of the first cycle was calculated. The results are shown in Table 2 below.

**[Table 2]**

| | Com position | | | | | | Initial discharge capacity (mAh/g) |
|---|---|---|---|---|---|---|---|
| | Positive electrode active material (%) | Binder | | Conductive material | | | |
| | | Content (%) | Size (nm) | Content (%) | Specific surface area (m²/g) | Micropore diameter (nm) | |
| Example 1 | 97 | 1 | 50 | 2 | 50 | 50 | 107.0 |
| Example 2 | 97 | 1 | 50 | 2 | 50 | 100 | 106.5 |
| Example 3 | 97 | 1 | 50 | 2 | 80 | 100 | 102.8 |
| Example 4 | 88 | 10 | 50 | 2 | 50 | 50 | 98.5 |
| Example 5 | 97 | 1 | 50 | 2 | 2000 | 50 | 101.4 |
| Comparat ive Example 1 | 97 | 1 | 50 | 2 | 50 | 2 | 95.7 |

### <Experimental Result Analysis>

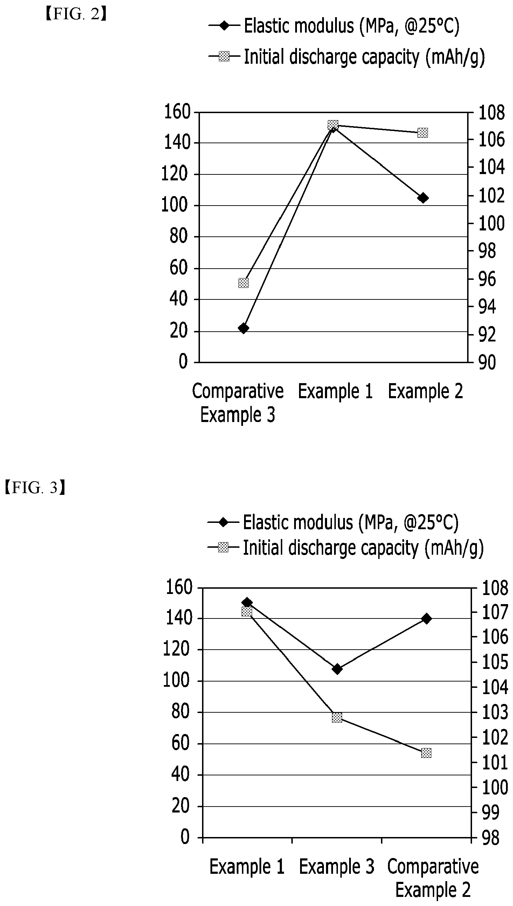

Fig. 2 is a graph for comparing the elastic modulus and initial discharge capacity according to the macropore diameter of the conductive material of the secondary battery electrode in Examples and Comparative Examples of the present disclosure, respectively. Particularly, Fig. 2 is a graph for comparing the elastic modulus and initial discharge capacity of Examples 1, 2, and Comparative Example 1 among the results shown in Tables 1 and 2. At this time, in Example 1, Example 2, and Comparative Example 1, the content of the positive electrode active material, the binder, and the conductive material is the same, and the specific surface area of the conductive material is also the same. However, the macropore diameter of the conductive material increases in the order of Comparative Example 1, Example 1, and Example 2.

Referring to Fig. 2, it can be confirmed that when the macropore diameter (2 nm) of the conductive material is smaller than the particle size (50 nm) of the binder as in Comparative Example 1, both the elastic modulus and the initial discharge capacity are reduced. This is because the macropore diameter of the conductive material is smaller than the particle size of the binder, and so the binder cannot be supported in the macropore of the conductive material.

On the contrary, it can be confirmed that in the case of Examples 1 and 2, the macropore diameter of the conductive material is similar to or larger than the particle size of the binder, respectively, so that both the elastic modulus and the initial discharge capacity are excellent.

However, it can be confirmed that the elastic modulus is slightly reduced as compared with the case where the macropore diameter (50 nm) of the conductive material is the same as the particle size (50 nm) of the binder as in Example 1. This is because when the macropore diameter (100 nm) of the conductive material is larger than the particle size of the binder as in Example 2, the dispersibility of the binder is lowered.

Thereby, when the macropore diameter of the conductive material is within the same range as in Examples 1 and 2, it can be confirmed that both the elastic modulus and the initial discharge capacity are excellent as a whole.

Fig. 3 is a graph for comparing an elastic modulus and an initial discharge capacity according to a specific surface area of a conductive material of an electrode for secondary battery in Examples of the present disclosure, respectively. Particularly, Fig. 3 is a graph for comparing the elastic modulus and initial discharge capacity of Examples 1, 3, and 5 among the results shown in Tables 1 and 2, respectively. At this time, in Examples 1, 3, and 5, the content of the positive electrode active material, the binder, and the conductive material is the same, and the macropore diameters of the conductive materials are similar, but the specific surface areas of the conductive materials are different from each other. Here, the specific surface area of the conductive material gradually increases in the order of Example 1, Example 2, and Comparative Example 5.

Referring to Fig. 3, it can be confirmed that when the specific surface area (2000 m²/g) of the conductive material is too large as in Example 5, the elastic modulus is excellent, whereas the initial discharge capacity is lowered, though not as much as in Comparative Example 1. This is because, if the specific surface area of the conductive material is too large as in Example 5, it is vulnerable to moisture, and thus side reactions within the electrode are increased.

Unlike the same, it can be confirmed that in the case of Examples 1 and 3, the specific surface area of the conductive material is not too large, and thus the elastic modulus and initial discharge capacity are excellent as a whole. Thereby, it can be confirmed that when the specific surface area of the conductive material is within the same range as in Examples 1 and 3, both the elastic modulus and the initial discharge capacity are excellent as a whole.

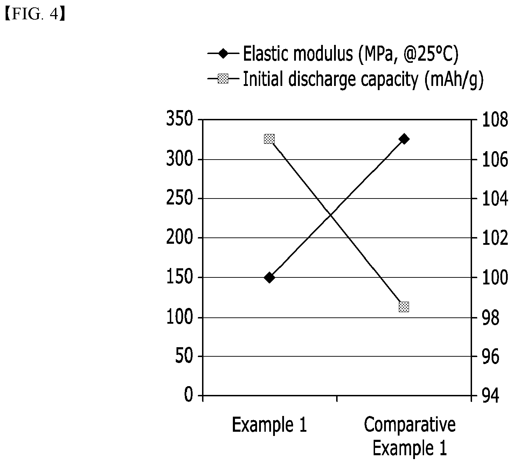

Fig. 4 is a graph for comparing an elastic modulus and an initial discharge capacity according to a binder content of an electrode for secondary battery in Examples and Comparative Examples of the present disclosure, respectively. Particularly, Fig. 4 is a graph for comparing the elastic modulus and initial discharge capacity of Examples 1 and 4 among the results shown in Tables 1 and 2, respectively. At this time, the particle sizes of the binders of Examples 1 and 4 are the same, the content, specific surface area, and macropore diameter of the conductive material are the same, but the content of the positive electrode active material and the binder is different. Here, the content of the binder increases in the order of Examples 1 and 4, and the content of the positive electrode active material decreases.

Referring to Fig. 4, it can be confirmed that as in Example 4, as the binder content (10% by weight) increases, the elastic modulus increases, wherein though not as much as Comparative Example 1, the initial discharge capacity decreases. It can be confirmed therefrom that as the content of the binder increases, the fiberization of the binder progresses relatively much and the elastic modulus increases, but the binder itself acts as a resistance, and the initial discharge capacity decreases.

On the contrary, it can be confirmed that in the case of Example 1, the elastic modulus is lower than that of Example 4, but the initial discharge capacity is higher than that of Example 4. Therefore, a preferable configuration in terms of both the elastic modulus and the initial discharge capacity is the case where the binder content is within the same range as in Example 1, and when this is satisfied, it can be confirmed that both the elastic modulus and the initial discharge capacity are excellent as a whole.

Although the preferred embodiments of the present disclosure have been described in detail above, the scope of the present disclosure is not limited thereto, and various modifications and improvements made by those skilled in the art using the basic concepts of the present disclosure defined in the following claims also falls within the spirit and scope of the present disclosure.

### [Industrial Applicability]

According to embodiments of the present disclosure, an electrode for secondary battery and a secondary battery including the same can be manufactured by using a conductive material having a small specific surface area and a large macropore diameter, thereby improving the elastic modulus and resistance reduction effect of the electrode.

The effects of the present disclosure are not limited to the effects mentioned above and additional other effects not described above will be clearly understood from the description of the appended claims by those skilled in the art.

## Claims

1. An electrode for secondary battery comprising:
an electrode current collector; and
an electrode layer positioned on the electrode current collector,
wherein the electrode layer comprises an electrode composition in which an active material, a conductive material and a binder are dry-mixed, and
wherein a diameter of the micropore formed in the conductive material is the same as or larger than a size of the binder.

2. The electrode for secondary battery according to claim 1, wherein:
the micropore diameter of the conductive material is 30 nm or more and 1000 nm or less.

3. The electrode for secondary battery according to claim 1, wherein:
the particle size of the binder is 30 nm or more and 1000 nm or less.

4. The electrode for secondary battery according to claim 2, wherein:
a specific surface area of the conductive material is 1 m²/g or more and 100 m²/g or less.

5. The electrode for secondary battery according to claim 1, wherein:
a content of the conductive material is 0.1% by weight or more and 10% by weight or less based on the total weight of the electrode composition.

6. The electrode for secondary battery according to claim 1, wherein:
the conductive material comprises a 3D porous carbon material, and
the binder comprises polytetrafluoroethylene (PTFE).

7. The electrode for secondary battery according to claim 1, wherein:
the active material comprises lithium manganese oxide (LMO).

8. The electrode for secondary battery according to claim 1, wherein:
the electrode composition is produced into a free-standing film, and
the free-standing film is attached onto the electrode current collector.

9. The electrode for secondary battery according to claim 8, wherein:
the free-standing film has an elastic modulus value of 30 MPa or more and 400 MPa or less.

10. A method of manufacturing an electrode for secondary battery, comprising the steps of:
dry-mixing a conductive material and a binder to prepare a mixture;
adding an active material to the mixture and then applying a shearing force to prepare an electrode composition; and
attaching the electrode composition onto an electrode current collector to manufacture an electrode for a secondary battery,
wherein a diameter of the micropore formed in the conductive material is the same as or larger than a size of the binder.

11. The method of manufacturing an electrode for secondary battery according to claim 10, wherein:
the micropore diameter of the conductive material is 30 nm or more and 1000 nm or less.

12. The method of manufacturing an electrode for secondary battery according to claim 10, wherein:
The particle size of the binder is 30 nm or more and 1000 nm or less.

13. The method of manufacturing an electrode for secondary battery according to claim 10, wherein:
a specific surface area of the conductive material is 1 m²/g or more and 100 m²/g or less.

14. The method of manufacturing an electrode for secondary battery according to claim 10, wherein:
a content of the conductive material is 0.1% by weight or more and 10% by weight or less based on the total weight of the electrode composition.

15. The method of manufacturing an electrode for secondary battery according to claim 10, wherein:
the conductive material comprises a 3D porous carbon material, and
the binder comprises polytetrafluoroethylene (PTFE).

16. The method of manufacturing an electrode for secondary battery according to claim 10, wherein:
the active material comprises lithium manganese oxide (LMO).

17. The method of manufacturing an electrode for secondary battery according to claim 10, wherein:
in the step of attaching the electrode composition onto an electrode current collector to manufacture an electrode for a secondary battery,
the electrode composition is produced into a free-standing film to be attached onto the electrode current collector.

18. The method of manufacturing an electrode for secondary battery according to claim 10, wherein:
the free-standing film has an elastic modulus value of 30 MPa or more and 400 MPa or less.

19. A secondary battery comprising the electrode for secondary battery as set forth in claim 1.
